Europäisches Patentamt

**European Patent Office**

**Office européen des brevets**

(11) Numéro de publication: **0 210 888**

**A1**

## (12) DEMANDE DE BREVET EUROPEEN

(21) Numéro de dépôt: **86401393.3**

(22) Date de dépôt: **25.06.86**

(51) Int. Cl.⁴: **B 01 D 3/14**
**B 01 D 1/28, C 10 G 7/00**

(30) Priorité: **28.06.85 FR 8509844**

(43) Date de publication de la demande:
**04.02.87 Bulletin 87/6**

(84) Etats contractants désignés:
**AT BE CH DE GB IT LI NL SE**

(71) Demandeur: **INSTITUT FRANCAIS DU PETROLE**
**4, Avenue de Bois-Préau**
**F-92502 Rueil-Malmaison(FR)**

(72) Inventeur: **Cheron, Jacques**
**76, bis, rue du Maréchal Foch**
**F-78600 Maisons Laffitte(FR)**

(72) Inventeur: **Rojey, Alexandre**
**29-33 rue Henri Regnault**
**F-92380 Garches(FR)**

(54) **Procédé de distillation avec récupération d'énergie par recompression de vapeur à l'aide d'un éjecteur.**

(57) L'invention concerne un procédé de fractionnement par distillation d'un mélange (F) d'au moins deux constituants séparables par distillation, pour obtenir séparément un produit de tête condensé (D) et un produit de fond (R), dans lequel on introduit dans une zone de distillation, ledit mélange (F) d'au moins deux constituants séparables de la chaleur (10) á ladite zone de distillation (1) et on recueille séparément une phase vapeur et une phase liquide de fond constituant le produit de fond (R) recherché, et dans lequel on prélève au moins une partie de la phase vapeur (3), on la comprime dans des moyens d'éjection au moyen d'un gaz moteur (6), on cède de la chaleur à l'une au moins des zones (20) de distillation (1) de manière à condenser au moins en partie le mélange éjecté formé par ledit gaz moteur et ladite partie de la phase vapeur, on soutire une partie du condensat (15) résultant, ladite partie constituant au moins une part du produit condensé (D) recherché, et on comprime par des moyens de compression (19) et on vaporise (21) au moyen de chaleur d'origine externe l'autre partie du condensat et on l'envoie aux moyens d'éjection comme gaz moteur (6).

PL.I.5
FIG.1

La présente invention est relative à des procédés de séparation du type distillation dans lesquels de la chaleur est fournie au système à un premier niveau de température et la totalité ou une fraction seulement de cette chaleur est rejetée par le système à un deuxième niveau de température inférieur à celui de son introduction. Une réduction de la chaleur à fournir au système est possible par réutilisation de la chaleur rejetée par le système. Exploitant les différences de volatilité des constituants d'un mélange la distillation permet la séparation ou fractionnement de ses constituants en fonction de leur température d'ébullition.

Travaillant comme une machine thermique entre une source chaude (four ou rebouilleur) et une source froide (condenseur de tête) la distillation met en oeuvre un contre courant de liquide et de vapeur. Les constituants les plus volatils s'accumulent dans la phase vapeur et sont au moins partiellement extraits au sommet de la colonne ou dans une zone de tête voisine du sommet de la colonne en un point situé entre le point d'introduction du mélange et le sommet. Les éléments lourds, en phase liquide, sont le plus souvent soutirés en fond de colonne. La répartition des constituants entre les deux phases se traduit entre la zone de tête et la zone de fond par un gradient de température qui dérive du gradient de concentration.

Une certaine quantité de chaleur doit donc être fournie au système dans la zone de fond de colonne de distillation tandis qu'une autre quantité de chaleur est rejetée par le système lors de la condensation de la phase vapeur issue de la zone de tête.

Les flux d'énergie importants dans ce type de procédé ont motivé la mise au point de techniques aptes à résoudre le problème du transfert de l'énergie entre le condenseur de tête et par exemple le rebouilleur ou la zone de fond.

Les techniques classiques de recyclage et de récupération d'énergie dans ce domaine ont fait l'objet de plusieurs publications : US-A-3,796,640 ; US-A-4,350,571 ; EP-A-70140. On peut citer à titre d'illustration l'utilisation de pompes à chaleur à compression, de pompes à chaleur à absorption, de la recompression mécanique de la vapeur (RMV), des techniques d'échanges thermiques entre plateaux de séparation, des techniques de transfert entre colonnes, des colonnes à multiples effets et toutes les combinaisons de ces techniques.

Cependant les techniques connues jusqu'à présent ne permettent pas d'apporter une solution correcte au problème de ce transfert thermique. En particulier les machines tournantes utilisées, soit dans les systèmes de type pompe à chaleur à compression, soit dans le système de recompression mécanique de vapeur, sont coûteuses et nécessitent un entretien également coûteux. Dans les cycles dits ouverts, tels que la recompression mécanique de vapeur, l'huile de lubrification du compresseur est mélangée au fluide à comprimer ce qui nécessite par la suite une séparation huile-fluide du procédé (mélange dont on veut séparer les constituants) qui si elle n'est pas très poussée risque de laisser de l'huile qui contamine le produit recherché.

Les pompes à chaleur à absorption présentent l'avantage d'utiliser comme énergie principale une source de chaleur à haute température en libérant une quantité accrue de chaleur au condenseur et à l'absorbeur.

Cependant la température de la chaleur récupérable au condenseur et à l'absorbeur de la pompe à absorption pour le rebouilleur est inférieure à celle du générateur de la pompe à chaleur. Cette dernière est donc le plus souvent élevée et il se pose assez rapidement des problèmes de stabilité thermique, de corrosion et/ou de cristallisation pour le couple de fluides internes à la pompe à absorption.

Les techniques d'échanges internes au sein de la colonne de distillation ne correspondent pas à une diminution de l'énergie requise mais plutôt à une diminution du niveau thermique auquel il faut fournir cette énergie. Enfin d'autres techniques de couplage de plusieurs colonnes sont plus complexes et ne peuvent être réalisées que dans certains cas d'application ou il existe effectivement un couplage possible de plusieurs opérations de séparation-distillation.

Il a été trouvé que les inconvénients décrits ci-dessus étaient largement évités par l'emploi d'un nouveau procédé de fractionnement par distillation, qui fait l'objet de la présente invention, consistant en ce que l'on fractionne par distillation un mélange (F) d'au moins deux constituants séparables par distillation, pour obtenir séparément un produit de tête condensé (D) et un produit de fond (R) dans lequel on introduit dans une zone de distillation, ledit mélange (F) d'au moins deux constituants séparables par distillation dans au moins une zone de distillation (1), on fournit de la chaleur à ladite zone de distillation (1) et on recueille séparément une phase vapeur et une phase liquide de fond constituant le produit de fond (R) recherché, comprenant :

. une étape (a) dans laquelle on comprime, dans des moyens d'éjection au moyen d'un gaz moteur, au moins une partie de la phase vapeur issue de la zone de distillation (1)

. une étape (b) dans laquelle on envoie le mélange éjecté formé par ledit gaz moteur et ladite partie de la phase vapeur dans une zone d'échange thermique où il cède de la chaleur à au moins une des zones de distillation (1) en se condensant au moins en partie

. une étape (c) dans laquelle on soutire une partie du condensat obtenu à l'étape (b), ladite partie constituant au moins une part du produit condensé (D) recherché

. une étape (d) dans laquelle on envoie une autre partie du condensat obtenu à l'étape (b) dans une zone de pressurisation où la pression dudit condensat est augmentée

. une étape (e) dans laquelle on envoie le condensat issu de l'étape (d) dans une zone d'échange thermique, où ledit condensat est au moins en partie vaporisé par échange de chaleur essentiellement avec une source de chaleur d'origine externe

. une étape (f) dans laquelle on envoie le fluide obtenu à l'étape (e) à l'étape (a) où il fournit l'énergie nécessaire à la compression de la phase vapeur issue de zone de distillation (1).

Dans ce nouveau procédé une partie au moins de la vapeur issue de la zone de distillation est généralement recueillie, après condensation, à titre de produit de tête (D).

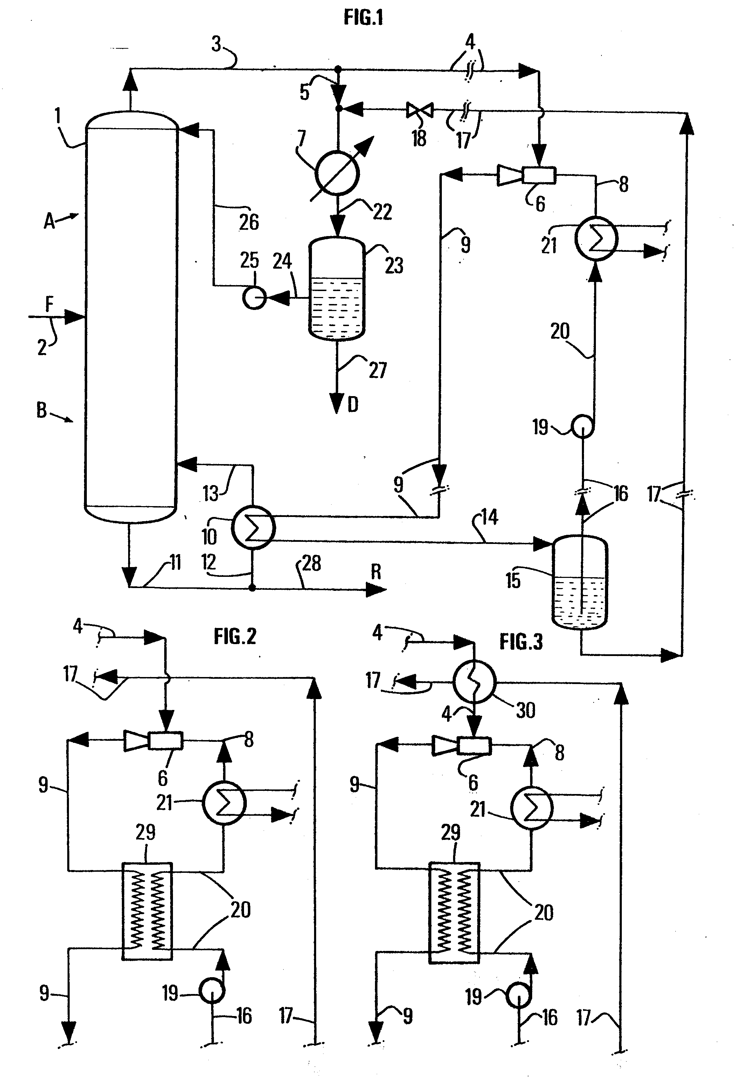

Le procédé peut être mieux compris par la description qui se réfère au schéma de principe de la figure 1.

La colonne à distiller (1) comprenant une zone de rectification (A) et une zone de strippage (B) est alimentée par le mélange (F) contenant les produits à séparer par la conduite d'arrivée (2).

Les composants de forte volatilité sont évacués par le conduit (3) sous forme d'une phase gazeuse dont au moins une partie et de préférence la plus grande partie est acheminée par le conduit (4) à un éjecteur ou thermocompresseur (6).

La fraction de la vapeur non acheminée par le conduit (4) vers l'éjecteur ou thermocompresseur (6) est évacuée par le conduit (5) vers le condenseur (7).

Au niveau de l'éjecteur ou thermocompresseur (6) il se produit, selon les lois connues pour ce type d'appareil, une compression du fluide arrivant par le conduit (4) par la détente d'une phase vapeur à haute pression introduite par le conduit (8) dans l'éjecteur ou thermocompresseur (6).

La phase vapeur comprimée et la phase vapeur détendue se retrouvent combinées dans le conduit (9) à une pression PM supérieure à celle régnant dans la conduite (4) (pression PB de la tête de colonne).

Cette phase vapeur se refroidit dans l'échangeur ou rebouilleur (10) en cédant au moins une partie de sa chaleur de condensation à une fraction du fluide extrait du fond de colonne par la conduite (11) envoyée à l'échangeur ou rebouilleur (10) par le conduit (12) et retournant à la colonne par la conduite (13).

La phase au moins partiellement condensée du fluide provenant de l'éjecteur (6) sort de l'échangeur ou rebouilleur (10) par le conduit (14). Les conditions opératoires de cette condensation au moins partielle dans l'échangeur ou rebouilleur (10) étant choisies pour se dérouler à une température au moins supérieure à celle requise par le rebouillage du fluide extrait du fond de colonne.

Le fluide au moins partiellement condensé issu de cette étape de condensation est envoyé par le conduit (14) dans le ballon de stockage (15). Une fraction du liquide contenu dans le ballon de stockage (15) est pompée par le conduit (16) à l'aide de la pompe (19), le reste du fluide retourne par le conduit (17) à la zone de détente (18) puis au condenseur de tête (7).

La fraction du liquide présente dans le ballon (15) et pompée par le conduit (16), est portée à haute pression PH par la pompe (19), puis envoyée par le conduit (20) à un échangeur de chaleur ou évaporateur (21). Par échange thermique au sein de l'évaporateur (21) avec un fluide externe ou tout autre procédé de chauffage (par exemple électrique ou échange de chaleur avec des fumées de combustion) le liquide arrivant par le conduit (20) est au moins partiellement vaporisé puis acheminé par la conduite (8) à la partie haute pression de l'éjecteur (6). Cet éjecteur est par exemple constitué d'un premier organe convergent-divergent qui détend la vapeur haute pression, entrant par le conduit (8), à une pression proche et légèrement inférieure à celle du fluide de la conduite (4). Cette détente provoque la mise en vitesse supersonique du fluide moteur qui entraîne le fluide présent dans la canalisation (4). La somme des deux fluides après mélange est animée d'une certaine vitesse et par exemple un deuxième organe convergent-divergent transforme cette vitesse en pression. Avec des conditions opératoires bien choisies la quantité de fluide entraîné peut être par exemple d'environ une à trois fois supérieure à celle du fluide moteur détendu. La quantité de fluide à vaporiser à haute pression est donc bien inférieure à la quantité de vapeur condensable obtenue à la sortie de l'éjecteur. La chaleur à fournir au fluide moteur est donc elle même inférieure à la chaleur récupérable au condenseur. Les conditions opératoires sont généralement choisies de manière à ce que le liquide arrivant par le conduit (8) soit de préférence en majeure partie sous forme vapeur et avantageusement totalement vaporisé.

Le fluide issu de l'échangeur de tête (7) après condensation au moins partielle et de préférence totale par échange thermique avec un fluide externe est envoyé par le conduit (22) dans un ballon de recette (23) d'où une fraction est envoyée par le conduit (24) pour être transférée par la pompe (25) et le conduit (26) en tête de la colonne (1) comme fluide de reflux.

La fraction non renvoyée en tête de colonne représentant de préférence la majeure partie du liquide contenu dans le ballon de recette (23) est extraite par le conduit (27) et correspond à une partie (D) de la fraction légère contenue dans le mélange (F) d'alimentation de la colonne.

Une partie de la fraction lourde du mélange (F) à séparer est évacuée par le conduit (11) en fond de colonne et une fraction (R) est récupérée par le conduit (28).

En définitive le procédé de la présente invention, peut être décrit comme un procédé de fractionnement dans lequel on introduit le mélange (F) dans une zone de distillation (1) comportant au moins une zone de rectification (A) et au moins une zone de strippage (B) ladite zone de rectification (A) étant située au dessus du point d'introduction du mélange (F) et ladite zone de strippage (B) étant située en dessous du point d'introduction du mélange (F) dans ladite zone de distillation (1), caractérisé en ce qu'il comprend :

.une étape a) dans laquelle on envoie une partie au moins de la vapeur issue de la zone de rectification (A) à la pression PB dans une zone de compression (6),lors de laquelle sa pression est amenée à une valeur PM supérieure à la valeur PB, par au moins un moyen d'éjection et éventuellement on envoie une autre partie de ladite vapeur à l'étape d)

.une étape b) dans laquelle on envoie le fluide comprimé issu de l'étape a) dans une zone d'échange thermique (10) dans laquelle il se condense au moins en partie en cédant de la chaleur à au moins une partie du produit issu de la zone de strippage de la même zone de distillation (1) ou d'une autre zone de distillation (1) que celle de laquelle provient le fluide comprimé issu de l'étape a),

.une étape c) dans laquelle on envoie le fluide au moins en partie condensé issu de l'étape b), éventuellement après passage dans une zone d'échange thermique dans laquelle il poursuit ou termine sa condensation, dans une zone de stockage de liquide (15),

. une étape d) dans laquelle on envoie une partie au moins du liquide contenu dans la zone de stockage (15) dans une zone de pressurisation (19) où la pression dudit liquide est augmentée,

. une étape e) dans laquelle on envoie le liquide pressurisé issu de l'étape d) dans une zone d'échange thermique (21) où ledit liquide est au moins en partie vaporisé par échange de chaleur avec une source de chaleur extérieure,

. une étape f) dans laquelle on envoie le fluide obtenu à l'étape e) dans la zone de compression (6) de l'étape a) où il fournit l'énergie nécessaire pour élever la pression de la vapeur issue de la zone de rectication (A) arrivant dans ladite zone de compression (6)

. une étape g) dans laquelle on envoie une partie au moins du liquide contenu dans la zone de stockage (15) dans une zone de détente (18), puis éventuellement dans une zone d'échange thermique (7) où il poursuit ou termine éventuellement en mélange avec une partie de la vapeur issue de l'étape a) sa condensation, et dans laquelle on renvoie une partie au moins du produit issu de la zone de détente (18) ou de la zone d'échange thermique (7) dans la zone de rectification (A),

et en ce que, une partie au moins de la vapeur issue de la zone de rectification (A) est recueillie après condensation à titre de produit de tête (D) et une partie au moins du produit issu de la zone de strippage (B) est recueilli à titre de produit de fond (R).

Selon une variante avantageuse au mode de réalisation du procédé décrit ci-dessus représenté sur la figure 2 (modification de la figure 1) un échangeur (29) permet le transfert d'une fraction de la chaleur contenue dans le fluide issu de l'éjecteur (6) au fluide moteur avant son introduction dans ledit éjecteur. Ceci permet de diminuer l'énergie à fournir pour la vaporisation du fluide moteur sans modifier le niveau thermique de condensation du fluide issu de l'éjecteur (6). Un transfert partiel d'une fraction de l'energie contenue dans le fluide issu de l'éjecteur (6) par la conduite (9) peut être également avangateusement réalisé par un échangeur non représenté sur la figure 2 pour s'assurer d'une vaporisation totale et éventuellement d'une surchauffe de la vapeur provenant de la colonne de distillation (1) amenée par les conduites (3) et (4). L'Homme de l'Art comprendra qu'un tel échange thermique permet le cas échéant d'éviter une condensation partielle de la vapeur issue de la conduite (4) dans le mélangeur de l'éjecteur (6).

Selon une autre variante avantageuse de réalisation du procédé décrit ci-dessus, représenté sur la figure 3 (modification de la figure 1), un échangeur (30) permet un transfert thermique d'une fraction de la chaleur de la phase liquide (issue du ballon (15)) et retournant par le conduit (17) au condenseur de tête (7) à la phase vapeur provenant de la colonne de distillation (1) par les conduites (3) et (4). Cet échange permet, d'une part, le plus souvent une surchauffe de la phase vapeur de la conduite (4) et le plus souvent une amélioration du fonctionnement de l'éjecteur (6) ; d'autre part une réduction de la chaleur à évacuer au niveau du condenseur de tête (7) est obtenue.

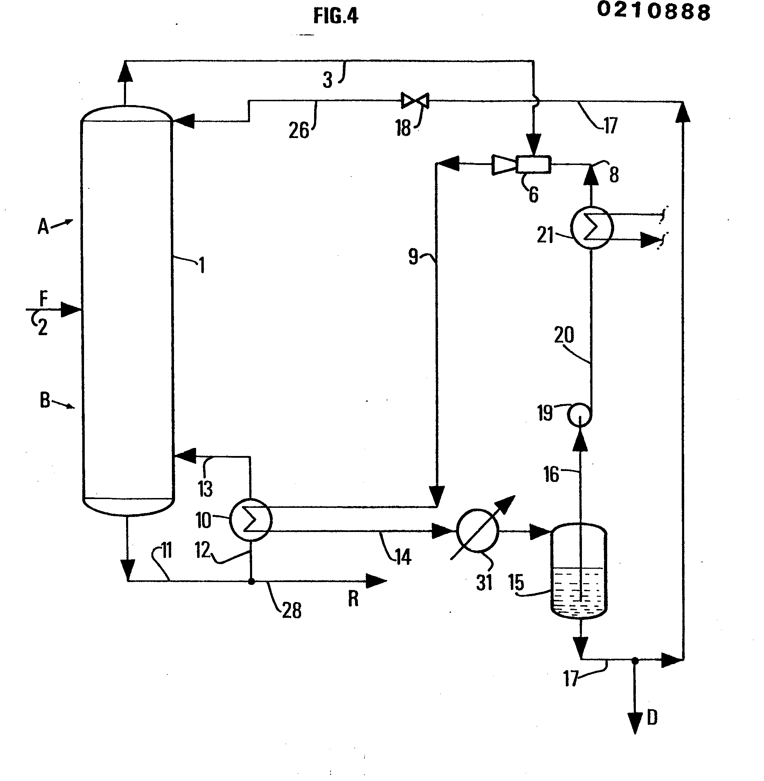

Selon un autre mode de réalisation du procédé illustré figure 4 la totalité de la phase vapeur issue de la tête de la zone de rectification (A) de la colonne (1) est acheminée par le conduit (3) à l'éjecteur (6).

Il en découle que la puissance thermique par condensation totale du fluide sortant par le conduit (9) est vraisemblablement supérieure aux besoins du rebouilleur. Une condensation partielle dans l'échangeur (10) sera alors suffisante pour l'apport thermique au rebouilleur et la condensation sera poursuivie ou achevée dans le condenseur (31) placé entre l'échangeur (10) et le ballon de stockage (15). Une première fraction de la phase liquide contenue dans le ballon (15) est utilisée comme reflux et retourne en tête de la colonne par l'intermédiaire de la canalisation (17), la zone de détente et éventuellement d'ajustement de débit (18) et le conduit (26). Une deuxième fraction de la phase liquide contenue dans le ballon (15) est pompée par le conduit (16), portée à haute pression par la pompe (19), puis envoyée par le conduit (20) à l'échangeur (21) dans lequelle elle se vaporise au moins en partie avant d'être envoyée à l'éjecteur (6) par le conduit (8).

Une troisième et dernière fraction du liquide contenu dans le ballon (15) est récupérée et correspond à une partie de la fraction légère (D) contenue dans le mélange (F) d'alimentation de la colonne (1).

Avec un tel mode de réalisation la pression en tête de colonne n'est contrôlée que par la dépression crée par l'éjecteur. En particulier cette pression peut être choisie pour obtenir une température de tête de colonne inférieure à la température ambiante. Le mode de réalisation ainsi décrit est parfaitement adapté au fonctionnement aux faibles températures de tête de colonne nécessitant habituellement la production de froid au condenseur de tête. Une partie(R) de la fraction lourde du mélange (F) à séparer est évacuée de la zone de strippage (B) par le conduit (11) en fond de colonne et récupérée par le conduit (28).

Une autre partie de la fraction lourde du mélange (F) évacuée par le conduit (11) est envoyée par le conduit (12) au rebouilleur (10) puis recyclée à la zone de strippage (B) par le conduit (13).

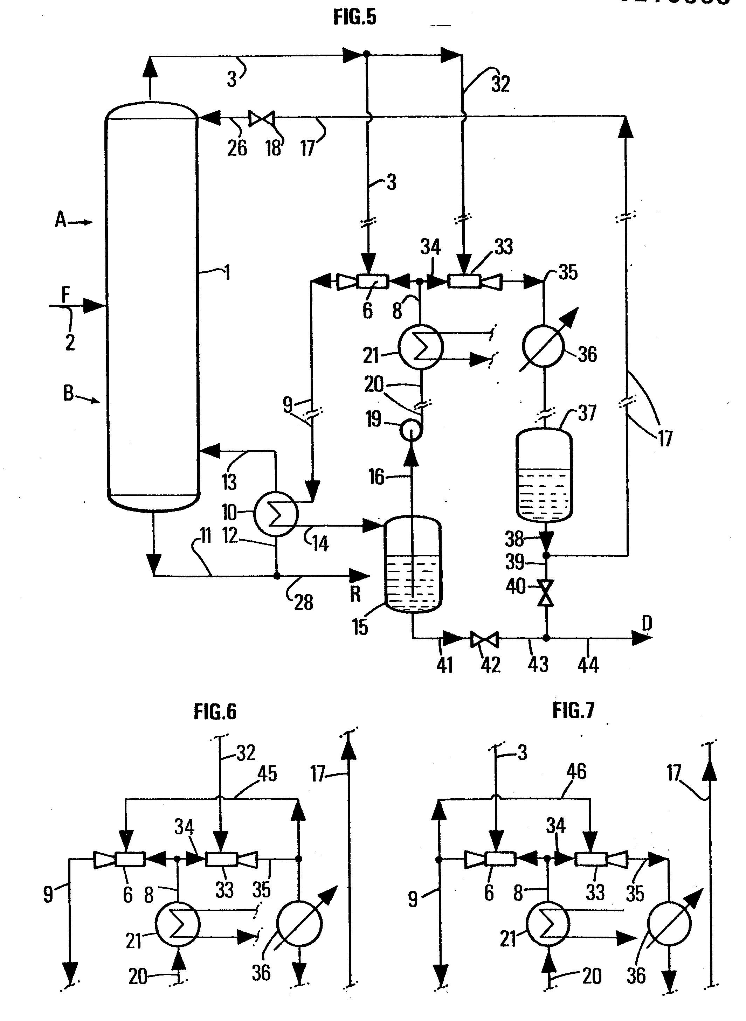

Selon un autre mode de réalisation du procédé illustré par la figure 5 seule une fraction de la vapeur de tête générée à une température inférieure à la température du milieu de refroidissement est recomprimée dans l'éjecteur (6) pour fournir l'apport thermique nécessaire au rebouilleur (10). L'autre fraction de la vapeur de tête est acheminée par le conduit (32) à un deuxième éjecteur (33) alimenté en vapeur haute pression par une fraction du fluide générée à l'échangeur (21) et arrivant par les conduits (8) et (34) dans l'éjecteur (33).

La présence d'un deuxième éjecteur permet d'ajuster le taux de compression de la vapeur de tête à une valeur suffisante pour que la vapeur issue de l'éjecteur (33) par le conduit (35) soit condensable dans l'échangeur (36) par un fluide externe de refroidissement (par exemple air ou eau). La vapeur condensée au moins en partie dans l'échangeur (36) est récupérée dans le ballon (37). On notera que les niveaux thermiques des étapes de condensation en (10) et en (36) peuvent être différents en particulier le procédé permet une condensation au moins partielle en (10) à une température inférieure à la température ambiante.

Le fluide liquide issu du ballon (37) par le conduit (38) est au moins en partie recyclé en tête de colonne par le conduit (17), la zone de détente et éventuellement d'ajustement de débit (18) et le conduit (26).

Le taux de reflux de la séparation envisagée peut être faible. Dans une telle hypothèse le débit du conduit (38) est supérieur au débit de reflux dans le conduit (17) et l'excédant est évacué par le conduit (39) et l'organe de règlage de débit (40) pour former une partie du débit de distillat (D) évacué par le conduit (44). Ce distillat provient également en partie d'une fraction du liquide issu du ballon (15) évacuée par le conduit (41), l'organe de règlage de débit (42) et le conduit (43). Si le taux de reflux est important le débit issu du conduit (38) peut être insuffisant ; dans ce cas une fraction du débit de liquide issu du ballon (15) par la conduite (41), l'organe de règlage de débit (42), le conduit (43), l'organe de règlage de débit (40) et le conduit (39) est envoyée par le conduit (17) vers la tête de la colonne.

Un autre mode de réalisation du procédé est illustré par le schéma de la figure 6 comparable dans son principe à celui précédemment décrit en liaison avec la figure 5 (la description des éléments de la figure 5 utilisés dans le procédé selon la figure 6 ne sera pas reprise ci-dessous) mais dans lequel le niveau de pression (et de température) du condenseur (10) est supérieur à celui du condenseur (36). Il peut être avantageux de profiter de la présence de deux éjecteurs pour réaliser la recompression de vapeur de tête issue de la colonne (1) en deux étapes.

Dans une première étape la vapeur de tête issue de la colonne (1) est comprimée par l'éjecteur (33) et une fraction est acheminée par le conduit (45) au deuxième éjecteur (6) dont le travail de compression est largement diminué.

Inversement et selon le mode de réalisation illustré par le schéma de principe de la figure 7 (modification de la figure 5) le niveau de température (donc de pression) du condenseur (10) est inférieur à celui du condenseur (36) et il est préférable de procéder à une première étape de compression de la vapeur de tête dans l'éjecteur (6)puis de recomprimer dans l'éjecteur (33)une fraction du débit de tête prélevée à la sortie de l'éjecteur (6) par le conduit (46) et envoyée à l'éjecteur (33).

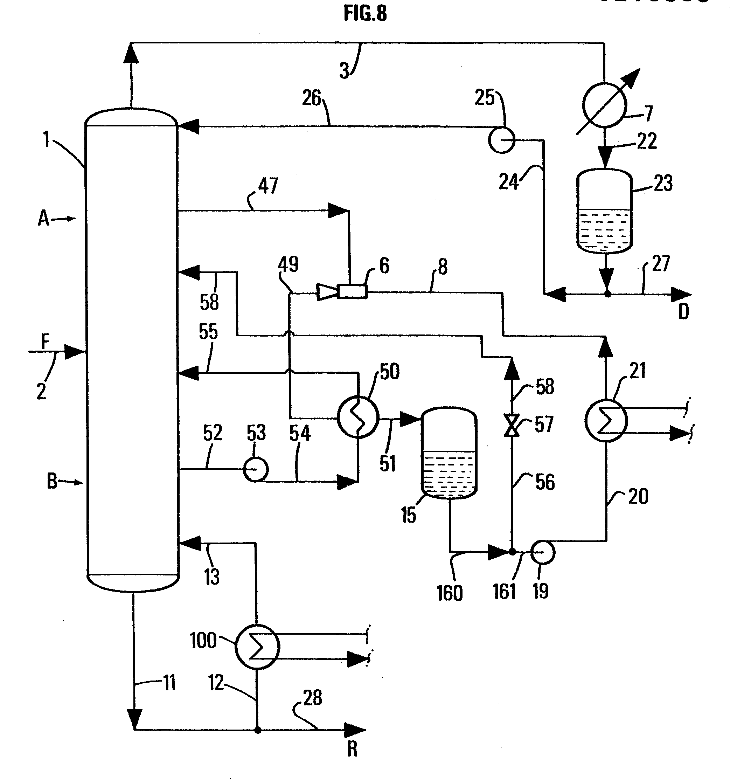

Selon un autre mode de réalisation illustré par le schéma de la figure 8 le transfert énergétique peut être assuré au niveau d'un reflux intermédiaire.La vapeur issue de la zone de rectification (A) en un point situé entre le point d'entrée du mélange (F) introduit par la conduite (2) dans la colonne (1) et la tête de la colonne (1) est acheminée par le conduit (47) à l'éjecteur (6). La vapeur est comprimée par la détente de la phase vapeur à haute pression générée dans l'échangeur (21) et entrant dans l'éjecteur (6) par le conduit (8). Le fluide résultant, issu de l'éjecteur (6), est envoyé par le conduit (49) au condenseur (50), il ressort du condenseur (50) au moins partiellement condensé par le conduit (51) reliant le condenseur (50) au ballon de stockage (15). Une fraction du liquide issu du ballon (15) par la conduite (160) est recyclée par la conduite (161), la pompe (19) et l'échangeur (21) pour générer la vapeur motrice haute pression. Le restant, correspondant au débit soutiré à la colonne, est recyclé à la colonne par les conduits (160) et (56), l'organe de règlage de pression et de débit (57) et le conduit (58).

L'échange thermique au condenseur (50) permet la vaporisation d'une fraction liquide soutirée de la zone d'épuisement ou zone de strippage (B) de la colonne par le conduit (52) et la pompe (53), puis acheminée à l'échangeur (50) par le conduit (54). La vapeur issue de l'échange thermique dans l'échangeur (50) est restituée à la colonne par le conduit (55).

Les vapeurs en tête de colonne sont prélevées par la conduite (3) et envoyées par la conduite (4) au condenseur (7) où elles sont au moins partiellement condensées. Le fluide issu du condenseur (7) est envoyé par le conduit (22) au ballon de recette (23). Une partie du liquide du ballon (23) est renvoyée par le conduit (24), la pompe (25) et le conduit (26) à la zone de rectification (A) de la colonne (1). Une autre partie du liquide contenu dans le ballon (23) est prélevée par le conduit (27) et correspond à une partie (D) de la fraction légère contenue dans le mélange (F).

Une partie de la fraction lourde du mélange (F) à séparer est évacuée par la ligne (11) en fond de colonne et une fraction (R) est récupérée par le conduit (28), le reste étant envoyé par le conduit (12) au rebouilleur (100) et recyclé dans la zone de strippage (B) de la colonne (1) par la conduite (13).

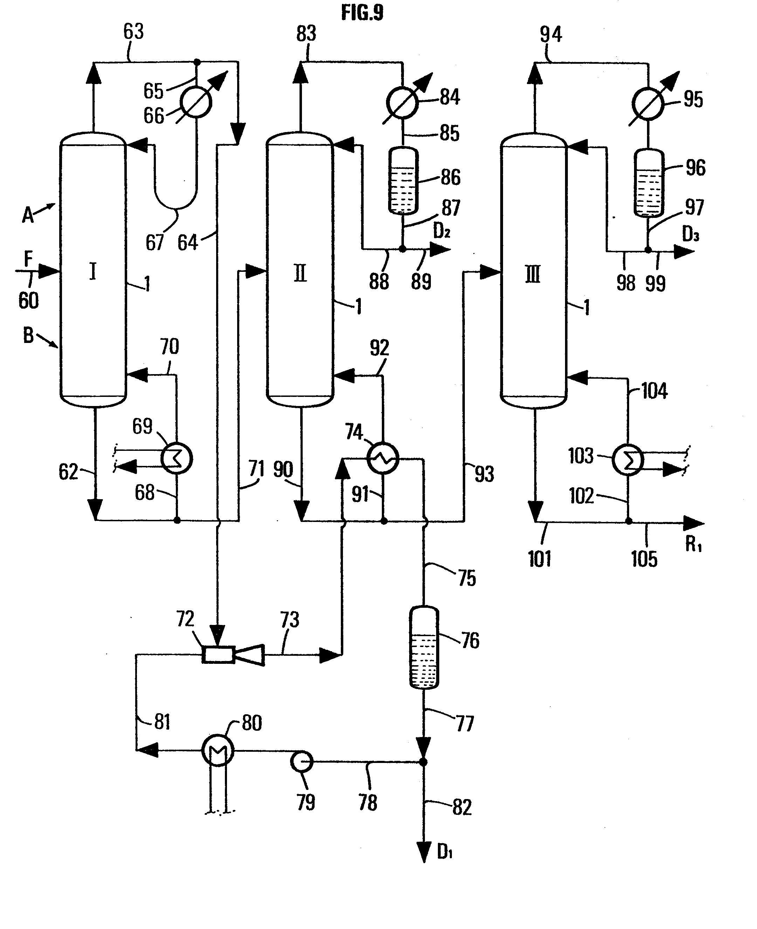

Selon un autre mode de réalisation illustré par la figure 9 le procédé de l'invention peut être également appliqué au cas d'un train de colonnes désignées par les références (I), (II) et (III) sur la figure 9. Selon cette réalisation le nombre de colonnes pourrait être supérieur à trois. Par condensation de la vapeur recomprimée de la colonne (I) par un éjecteur (6) il est possible par exemple de fournir l'apport thermique nécessaire aux rebouilleurs de la colonne (II) ou des colonnes (I) et (II) ou des colonnes (II) et (III) ou toute autre combinaison, selon les niveaux de température et les besoins énergétiques.

D'autres modifications peuvent être apportées par l'Homme de Métier, au schéma de principe décrit en liaison avec la figure 9 sans sortir du cadre de l'invention. Il est en particulier possible d'envisager l'utilisation d'un éjecteur utilisant par exemple une fraction de la vapeur issue de la colonne II qu'il recomprime, ladite vapeur recomprimée cédant alors de la chaleur par exemple au rebouilleur de la colonne III.

Dans le schéma de principe représenté sur la figure 9 comprenant trois colonnes (I), (II) et (III) le mélange (F) est introduit par la ligne (60) en un point intermédiaire de la colonne (I). Les vapeurs de tête sont récupérées par la conduite (63), une partie passe par la conduite (65) dans l'échangeur de chaleur (66) ou elles sont au moins partiellement condensées. Le fluide issu du condenseur (66) est renvoyé par la conduite (67) à la colonne (I) à titre de reflux. L'autre partie des vapeurs de tête récupérées par la conduite (63) est envoyée par la conduite (64) dans l'éjecteur (72). Au niveau de l'éjecteur (72) le fluide arrivant par le conduit (64) est comprimé par la détente de la vapeur à haute pression arrivant par le conduit (81) dans l'éjecteur (72). Le mélange de fluide repart de l'éjecteur (72) par le conduit (73) et traverse le rebouilleur (74) de la colonne (II), en échangeant de la chaleur avec une partie du produit de fond de cette colonne, il ressort du rebouilleur (74) au moins partiellement condensé et est envoyé par le conduit (75) au ballon de stockage (76). Une première partie du liquide contenu dans le ballon de stockage (76) est récupérée par les lignes (77) et (82) et correspond à une partie (D1) de la fraction légère contenue dans le mélange (F). Une deuxième partie du liquide contenu dans le ballon (76) est pompée par la conduite (77) et (78) par la pompe (79) qui augmente la pression du fluide et l'envoie à l'échangeur de chaleur ou évaporateur (80) ou il se vaporise au moins en partie avant d'être renvoyé à l'éjecteur (72) par le conduit (81). Une troisième et dernière partie du liquide contenu dans le ballon de stockage (76) peut être recyclée, de préférence après détente et éventuellement condensation dans l'échangeur de chaleur (66), en tête de la colonne (I). Une partie du produit de fond de la colonne (I) est envoyée par les lignes (62) et (68) au rebouilleur (69) puis recyclée par la ligne (70) à la colonne (I). Une autre partie du produit de fond de la colonne (I) est envoyée par les lignes (62) et (71) à la colonne (II). En tête de colonne (II) les vapeurs sortant par la conduite (83) sont condensées, au moins en partie, dans l'échangeur de chaleur (84). Le fluide obtenu à la sortie du condenseur (84) est envoyé par la conduite (85) au ballon de recette (86). Une partie du liquide contenu dans le ballon de recette (86) est renvoyée par les conduites (87) et (88) à la colonne (II) (à titre de reflux), une autre partie du liquide contenu dans le ballon (86) est récupérée par les conduites (87) et (89) et correspond à une fraction (D2) du mélange (F) introduit dans la colonne (I).

Une partie du produit de fond de la colonne (II) est envoyée par les lignes (90) et (91) au rebouilleur (74) (voir ci-dessus) puis recyclée à la colonne (II) par la conduite (92) ; une autre partie du produit de fond de la colonne (II) est envoyée par les conduites (90) et (93) à la colonne (III).

En tête de colonne (III) les vapeurs sortant par la conduite (94) sont au moins en partie condensées dans l'échangeur de chaleur (95). Le fluide obtenu à la sortie de l'échangeur (95) est envoyé dans le ballon de recette (96). Une partie du liquide contenu dans le ballon (96) est recyclée par les conduites (97) et (98) à la colonne (III) (à titre de reflux), une autre partie du liquide contenu dans le ballon (96) est récupérée par les conduites (97) et (99) et correspond à une fraction (D3) du mélange (F) introduit dans la colonne (I). Une partie du produit de fond de la colonne (III) est envoyée par les conduites (101) et (102) au rebouilleur (103) puis recyclée à la colonne (III) par la conduite (104) ; une autre partie (R) du produit de fond de la colonne (III) est récupérée par les conduites (101) et (105) et correspond à une partie de la fraction lourde du mélange (F) introduit dans la colonne (I).

Les variantes de réalisation du procédé (figures 2 et 3) selon l'invention telles que décrites ci-dessus en liaison avec la figure 1 s'appliquent également très avantageusement aux modes de réalisations de l'invention tels que décrits en liaison avec les figures 4 à 9.

Dans le cas du mode de réalisation décrit en liaison avec la figure 5 il est également possible d'envisager l'utilisation de deux échangeurs du type de l'échangeur (30) décrit avec la variante de la figure 3. Un échange de chaleur sera alors effectué entre le fluide retournant par la conduite (17) en tête de la colonne et la vapeur de tête envoyée aux éjecteurs (6) et (33) par les conduits (3) et (32).

Le procédé ainsi décrit permet donc la récupération de l'énergie de condensation de vapeur issue de la zone de rectification d'une colonne pour son utilisation au rebouillage de la solution en zone d'épuisement ou de strippage ou de fond de colonne. La remontée de niveaux thermiques nécessaire pour cette récupération est assurée par la vaporisation sensiblement complète d'au moins une fraction du fluide du procédé (mélange F) par apport thermique. Un des avantages du procédé est que cet apport thermique est inférieur à la quantité de chaleur nécessaire au rebouilleur de la colonne conduisant ainsi à une économie d'énergie. Un autre avantage du procédé est de pouvoir s'ajuster à la demande d'énergie du rebouilleur quelque soit l'écart de température et de pression entre la vapeur de tête de colonne et le fluide du fond de cette colonne. En effet le taux d'entrainement de vapeur de tête est ajustable par le niveau de la haute pression du gaz moteur ou vapeur motrice employé au niveau des moyens d'éjection. Ce taux d'entrainement peut ainsi varier de près de 0,1 à plusieurs unités. Cela signifie que la chaleur cédée au rebouilleur sera fournie en proportion variable par la condensation de la vapeur de tête et par le générateur de vapeur haute pression.

Cette souplesse d'adaptation ne se retrouve pas dans le cas de recompression mécanique de vapeur procédé dans lequel le coefficient de performance COP (rapport de la chaleur récupérable au travail mécanique au compresseur) est essentiellement lié aux niveaux de température de tête et de fond de colonne.

Lorsque ces températures sont proches le COP est élevé et la chaleur récupérable au rebouilleur est elle même très proche de celle contenue dans la vapeur de tête. Si le bon fonctionnement de la séparation par colonne exige une chaleur plus importante que celle disponible après recompression de la vapeur il est nécessaire de prévoir un appoint thermique avec un autre rebouilleur. Cet inconvénient est évité avec le procédé selon la présente invention.

Un autre avantage du procédé de l'invention est lié à l'utilisation comme fluide de transfert thermique entre tête et fond d'une partie du mélange (F) introduit dans la colonne. Cela permet d'éviter toute contamination par un autre fluide comme pourraît le faire l'huile d'un compresseur. Cela permet également d'utiliser ce cycle de récupération thermique à des niveaux de température supérieurs à ceux accessibles aux fluides des pompes à chaleur avec fluide de travail de type hydrocarbures halogénés. Un autre avantage est l'absence d'organe tournant tel qu'un compresseur.

Un autre avantage du procédé est la simplicité du cycle qui hormis les échangeurs normaux de toute distillation ne requiert le plus souvent qu'un rebouilleur, une pompe et un ou deux éjecteurs. De tels appareils sont classiques, robustes et peu coûteux.

La différence de température entre la base de la colonne et la fraction en phase vapeur en tête de colonne, peut être relativement élevée, par exemple supérieure à 5° C ou à 10° C et même plus, par exemple jusqu'à 100° C.

'

D'autres avantages du procédé sont liés à sa faculté de s'adapter, aux niveaux de température de la colonne même inférieurs à la température ambiante, à différentes sources thermiques pour vaporiser le fluide haute pression. En particulier l'adjonction d'une chaudière électrique de faible coût permet l'utilisation de l'énergie électrique lorsque celle-ci est économiquement accessible.

A titre d'exemples non limitatifs le procédé est particulièrement bien adapté à la séparation des mélanges dont l'un au moins des constituants est un produit organique. On peut citer à titre d'exemple la séparation des mélanges suivants : éthane-éthylène, propane-propylène, éthylbenzène-styrène, n-butane-isobutane (déisobutanisation), n-pentane-isopentane (déisopentaniseur).

Le procédé peut être également appliqué à la récupération d'eau douce à partir d'eau salée ou d'eau saumâtre et à la récupération d'eau potable à partir d'eau impure.

Le procédé peut être également appliqué à la séparation de mélanges contenant plus de deux constituants ; à titre d'exemple on peut citer les mélanges benzène-toluène-xylènes.

Exemple

L'exemple est décrit en liaison avec la figure 2, il concerne la séparation d'isopentane du n-pentane.

L'isopentane est évacué en tête de colonne à 40,3 °C sous 1,5 bar par la conduite (3).

L'éjecteur est alimenté en vapeur d'isopentane haute pression c'est à dire de l'isopentane à 180 °C et 30 bars (3 Mégapascals) par la conduite (8).

La vaporisation de 22,7 Kg/h d'isopentane arrivant par le conduit (20) dans l'évaporateur (21) nécessite 10063 kJ/h depuis 73 °C (température d'entrée) jusqu'à 180 °C (température à la sortie de l'évaporateur (21)). Cette vapeur est capable d'entrainer 42,2 kg/h d'isopentane à 1,5 bar et 40,3 °C pour obtenir en sortie d'éjecteur (6) 64,9 kg/h d'isopentane à 3 bar et 78,2 °C dans la conduite (9). Ce flux de vapeur est refrodi dans l'échangeur (29) jusqu'à 74,4 °C par échange thermique avec le débit d'isopentane recyclé vers l'évaporateur (21) par la pompe (19) . Au niveau du rebouilleur il est donc possible de récupérer l'énergie thermique correspondant à 21733 kJ/h si l'on condense l'isopentane à 65 °C et 3 bar au rebouilleur (10). Cette puissance thermique est cédée à 60 °C au fluide du fond de colonne.

Le cycle ainsi décrit montre que la puissance thermique à fournir au procédé est 10063 kJ/h au lieu de 21733 kJ/h en utilisant un rebouillage direct du fond de colonne. Le COP défini comme le rapport de l'énergie transmise au rebouilleur à l'énergie fournie au système est de 2.16. Si l'on ne procède pas à l'échange de chaleur entre le gaz issu de l'éjecteur et le liquide recyclé sous haute pression (schéma de la figure 1) il faut alors fournir au système 506 kJ/h en plus soit 10569 kJ/h mais le rebouilleur en récupère également 506 kJ/h de plus soit 22240 kJ/h le COP est alors de 2.10.

Dans les deux cas envisagés les 42,2 kg/h d'isopentane aspirés au niveau de l'éjecteur retournent au condenseur de tête (7) avec la fraction de vapeur de tête qui n'a pas été aspirée par l'éjecteur.

REVENDICATIONS

1. Procédé de fractionnement, par distillation, d'un mélange (F) d'au moins deux constituants séparables par distillation, pour obtenir séparément un produit de tête condensé (D) et un produit de fond (R), dans lequel on introduit ledit mélange (F) d'au moins deux constituants séparables par distillation dans au moins une zone de distillation (1),on fournit de la chaleur à ladite zone de distillation (1) et on recueille séparément une phase vapeur et une phase liquide de fond constituant le produit de fond (R) recherché, caractérisé en ce qu'il comprend :

. une étape (a) dans laquelle on comprime, dans des moyens d'éjection, au moyen d'un gaz moteur, au moins une partie de la phase vapeur issue de la zone de distillation (1),

. une étape (b) dans laquelle on envoie le mélange éjecté formé par ledit gaz moteur et ladite partie de la phase vapeur dans une zone d'échange thermique où il cède de la chaleur à au moins une des zones de distillation (1) en se condensant au moins en partie,

. une étape (c) dans laquelle on soutire une partie du condensat obtenu à l'étape (b), ladite partie constituant au moins une part du produit condensé (D) recherché,

. une étape (d) dans laquelle on envoie une autre partie du condensat obtenu à l'étape (b) dans une zone de pressurisation où la pression dudit condensat est augmentée,

. une étape (e) dans laquelle on envoie le condensat issu de l'étape (d) dans une zone d'échange thermique, où ledit condensat est au moins en partie vaporisé par échange de chaleur essentiellement avec une source de chaleur d'origine externe,

. une étape (f) dans laquelle on envoie le fluide obtenu à l'étape (e) à l'étape (a) où il fournit l'énergie nécessaire à la compression de la phase vapeur issue de zone de distillation (1).

2. Procédé selon la revendication 1, dans lequel on introduit le mélange (F) dans une zone de distillation (1) comportant au moins une zone de rectification (A) et au moins une zone de strippage (B), ladite zone de rectification (A) étant située au dessus du point d'introduction du mélange (F) et la dite zone de strippage (B) étant située en dessous du point d'introduction du mélange (F) dans ladite zone de distillation (1), caractérisé en ce qu'il comprend :

. une étape a) dans laquelle on envoie une partie au moins de la vapeur issue de la zone de rectification (A) à la pression PB dans une zone de compression (6), lors de laquelle sa pression est amenée à une valeur PM supérieure à la valeur PB, par au moins un moyen d'éjection et éventuellement on envoie une autre partie de ladite vapeur à l'étape d),

. une étape b) dans laquelle on envoie le fluide comprimé issu de l'étape a) dans une zone d'échange thermique (10) dans laquelle il se condense au moins en partie en cédant de la chaleur à au moins une partie du produit issu de la zone de strippage de la même zone de distillation (1) ou d'une autre zone de distillation (1) que celle de laquelle provient le fluide comprimé issu de l'étape a),

. une étape c) dans laquelle on envoie le fluide au moins en partie condensé issu de l'étape b), éventuellement après passage dans une zone d'échange thermique dans laquelle il poursuit ou termine sa condensation,dans une zone de stockage de liquide (15),

. une étape d) dans laquelle on envoie une partie au moins du liquide contenu dans la zone de stockage (15) dans une zone de pressurisation (19) où la pression dudit liquide est augmentée,

. une étape e) dans laquelle on envoie le liquide pressurisé issu de l'étape d) dans une zone d'échange thermique (21) où ledit liquide est au moins en partie vaporisé par échange de chaleur avec une source de chaleur extérieure,

. une étape f) dans laquelle on envoie le fluide obtenu à l'étape e) dans la zone de compression (6) de l'étape a) où il fournit l'énergie nécessaire pour élever la pression de la vapeur issue de la zone de rectication (A) arrivant dans ladite zone de compression (6),

. une étape g) dans laquelle on envoie une partie au moins du liquide contenu dans la zone de stockage (15) dans une zone de détente (18), puis éventuellement dans une zone d'échange thermique (7) où il poursuit ou termine éventuellement en mélange avec une partie de la vapeur issue de l'étape a) sa condensation, et dans laquelle on renvoie une partie au moins du produit issu de la zone de détente (18) ou de la zone d'échange thermique (7) dans la zone de rectification (A),

et en ce que, une partie au moins de la vapeur issue de la zone de rectification (A) est receuillie après condensation à titre de produit de tête (D) et une partie au moins du produit issu de la zone de strippage (B) est recueillie à titre de produit de fond (R).

3.- Procédé selon la revendication 1 ou 2 dans lequel la vapeur issue de la zone de distillation (1) est recueillie en tête de ladite zone de distillation.

4. Procédé selon l'une des revendications 2 ou 3 dans lequel la totalité de la vapeur issue de la zone de distillation (1), et recueillie en tête de ladite zone de distillation, est envoyée à la zone de compression de l'étape a) ,le produit de tête (D) recherché étant recueilli à l'étape c).

5. Procédé selon l'une des revendications 1 à 4 dans lequel le fluide comprimé issu de l'étape a) échange de la chaleur avec le fluide issu de la zone de pressurisation de l'étape d) ledit fluide comprimé issu de l'étape a) étant ensuite envoyé à la zone d'échange thermique de l'étape b) et le fluide issu de ladite zone de pressurisation de l'étape d) étant ensuite envoyé à la zone d'échange thermique de l'étape e).

6. Procédé selon l'une des revendications 2 à 5 dans lequel le fluide issu de l'étape c), et envoyé à la zone de détente (18), échange de la chaleur avec la vapeur issue de la zone de rectificaton (A) avant ladite zone de détente (18), la vapeur issue de la dite zone de rectification (A) étant envoyée après ledit échange de chaleur à la zone de compression (6).

7. Procédé selon l'une des revendications 2 à 6 dans lequel le fluide issu de l'étape b) poursuit ou termine sa condensation dans une zone d'échange thermique (31) (voir figure 4) avant d'être envoyé à la zone de stockage (15).

8. Procédé selon l'une des revendications 2 à 7 dans lequel une partie au moins de la vapeur issue de la zone de rectification (A) est envoyée à la zone de compression (6), le reste de la vapeur issue de ladite zone (A) étant envoyée à une zone de compression (33) (voir figure 5) dans laquelle sa pression est augmentée ,l'energie necessaire à cette augmentation de pression étant fournie par une partie du fluide provenant de la zone d'échange thermique (21), le fluide issu de la zone de compression (33) est envoyé par le conduit (35) dans la zone d'échange thermique (36) dans laquelle il se condense au moins en partie, le liquide obtenu est recueilli dans le ballon de stockage (37), une partie au moins du liquide contenu dans le ballon (37) est renvoyée à la zone de détente (18) puis renvoyée à la zone de rectification (A), le reste du liquide est evacué par les conduits (38) et (39) et l'organe de réglage de débit (40) pour former une partie du produit de tête (D) receuilli par la conduite (44),l'autre partie du produit de tête (D) provenant du ballon de stockage (15) par la conduite (41), l'organe de réglage de débit (42) et le conduit (43), et dans lequel la partie de la vapeur issue de la zone de rectification (A) et envoyée à la zone de compression (6) dans laquelle sa pression est augmentée par l'énergie fournie par une partie au moins du fluide provenant de la zone d'échange thermique (21), est envoyée à la zone d'échange thermique (10) où elle se condense au moins en partie en cédant de la chaleur à au moins une partie du produit issu de la zone de strippage (B) puis est envoyée au ballon de stockage (15), une partie du liquide du ballon (15) étant envoyée à la zone d'échange thermique (21).

9. Procédé selon la revendication 8 dans lequel la totalité de la vapeur issue de la zone de rectification (A) est envoyée à la zone de compression (33) (voir figure 6) une partie du fluide sortant de ladite zone de compression (33) étant envoyée à la zone de compression (6) l'autre partie étant envoyée à la zone d'échange thermique (36).

10. Procédé selon la revendication 9 dans lequel la totalité de la vapeur issue de la zone de rectification (A) est envoyée à la zone de compression (6) (voir figure 7),une partie du fluide sortant de ladite zone de compression (6) étant envoyée à la zone de compression (33),l'autre partie étant envoyée à la zone d'échange thermique (10).

11. Procédé selon l'une des revendications 2 à 10 dans lequel la vapeur issue de la zone de rectification (A) et recueillie en tête de ladite zone est au moins en partie condensée dans une zone d'échange thermique (7), une partie du liquide obtenu étant recyclée à ladite zone de rectification (A) l'autre partie formant le produit condensé (D) recherché étant récupérée (voir figure 8), la vapeur issue d'un point intermédiaire de la zone de rectification (A) situé entre le point d'entrée du mélange (F) et la tête de ladite zone de rectification est envoyée en totalité à la zone de compression (6) par le conduit (47) dans laquelle sa pression est augmentée par apport d'énergie par le fluide provenant de la zone d'échange thermique (21), le fluide sortant de ladite zone de compression (6) est envoyé par la conduite (49) à la zone d'échange thermique (50) où il échange de la chaleur avec une partie du produit soutiré de la zone de strippage en un point situé entre le fond de ladite zone de strippage et le point d'introduction du mélange (F),par la conduite (52) la pompe (53) et la conduite (54), ledit produit étant ensuite renvoyé dans ladite zone de strippage par la conduite (55) ,le fluide provenant de la zone de compression (6) et ayant traversé la zone d'échange thermique (50) est envoyé par la conduite (51) au ballon de stockage (15),une partie du liquide contenu dans le ballon de stockage est renvoyée à travers la zone de réglage de pression et débit (57) à la zone de rectification (A) en un point situé entre le point d'introduction du mélange (F) et le point de soutirage de la vapeur envoyée à la zone de compression (6), l'autre partie est envoyée à la zone de pressurisation (19) puis à la zone d'échange thermique (21), le produit prélevé en fond de la zone de strippage est en partie récupéré par la conduite (28) à titre de produit de fond (R), l'autre partie étant envoyée au rebouilleur (100) puis recyclée à la zone de strippage (B) en un point situé entre le fond de ladite zone et le point de soutirage du produit envoyé à la zone d'échange thermique (50) par la conduite (52).

12. Procédé selon l'une des revendications 1 à 11 dans lequel on utilise plusieurs zones de distillation (1) (voir figure 9) la vapeur issue de la zone de rectification (A) de la colonne (I) étant en partie envoyée à la zone de compression (72) et en partie recyclée après condensation au moins partielle dans l'échangeur de chaleur (66) à ladite zone de rectificaion (A),la vapeur arrivant dans la zone de compression (72) est portée à une pression plus élevée par apport d'énergie par le fluide provenant de la zone d'échange thermique (80) et arrivant dans ladite zone de compression (72) par la conduite (81) le fluide sortant de ladite zone (72) par la conduite (73) est envoyé à la zone d'échange thermique (74) où il échange de la chaleur avec une partie du produit issu de la zone de strippage de la colonne (II) par le conduit (90) et arrivant dans ladite zone (74) par la conduite (91) et repartant vers ladite zone de strippage de la colonne (II) par la conduite (92), le fluide provenant de la zone de compression (72) ressort de la zone d'échange thermique (74) au moins en partie condensé et est envoyé au ballon de stockage (76), une partie du fluide contenu dans le ballon (76) est envoyée à la zone de pressurisation (79) par les conduites (77) et (78) puis à la zone d'échange thermique (80), l'autre partie est reccueillie par les conduites (77) et (82) et constitue le produit de tête $(D_1)$, une partie du produit issu de la zone de strippage (B) de la colonne (I) est envoyée à la colonne (II) et constitue le courant d'alimentation de ladite colonne (II),l'autre partie est envoyée au rebouilleur (69) puis renvoyée dans la zone de strippage (B) de la colonne (I), la partie du produit issue de la zone de strippage de la colonne (II) et non envoyée à l'échangeur (74) est envoyée comme courant d'alimentation dans la colonne (III), la vapeur issue de la zone de rectification de la colonne (II) est envoyée dans la zone d'échange thermique (84) où elle se condense au moins en partie,le fluide obtenu est en partie recyclé à titre de reflux dans la zone de rectification de la colonne (II), le reste est recueilli et forme le produit de tête $(D_2)$, la vapeur issue de la zone de rectification de la colonne (III) est au moins en partie condensée dans la zone d'échange thermique (95), le fluide obtenu est en partie recyclé à titre de reflux dans la zone de rectification de la colonne (III), le reste est recueilli et forme le produit de tête $(D_3)$, le produit issu de la zone de strippage de la colonne (III) est en partie envoyé au rebouilleur (103) puis recyclé dans ladite zone de strippage de la colonne (III), le reste est recueilli et forme le produit de fond $(R_1)$ du procédé.

PL_I.5

FIG.1

0210888

PL.III.5

0210888

FIG.5

FIG.6  FIG.7

PL.V.5
FIG.9

0210888

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 288 685 (C.A. KEMPER et al.) <br> * Figure * | 1,3 | B 01 D 3/14 <br> B 01 D 1/28 <br> C 10 G 7/00 |
| | --- | | |
| X | US-A-3 214 352 (A.N. WELLS) <br> * Figure 1 * | 1-4 | |
| | --- | | |
| Y | US-A-3 109 782 (W.S. NATHAN) <br> * Colonne 2, lignes 39-70; figure * | 1-3 | |
| A | | 5 | |
| | --- | | |
| Y,D | US-A-3 796 640 (R.C. BOOMER) <br> * Colonne 3, lignes 27-30; figure * | 1-3 | |
| | | | **DOMAINES TECHNIQUES RECHERCHES (Int. Cl.4)** |
| | --- | | |
| A | GB-A-1 452 377 (BRITISH PETROLEUM) <br> * En entier * | 1,2 | B 01 D <br> C 10 G |
| | --- | | |
| X,P | US-A-4 566 947 (HIDEMASA TSURUTA) <br> * Figures 1-3 * | 1-4 | |
| | --- | | |
| A,P | FR-A-2 570 285 (LAGUILHARRE SA) <br> * Figures * | 6 | |
| | ----- | | |

Le present rapport de recherche a été établi pour toutes les revendications

| Lieu de la recherche <br> **LA HAYE** | Date d'achèvement de la recherche <br> **06-10-1986** | Examinateur <br> **VAN BELLEGHEM W.R.** |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82